# EUROPÄISCHE PATENTANMELDUNG

(11) **EP 3 199 399 A1**
(43) Veröffentlichungstag der Anmeldung: **02.08.2017**
(21) Anmeldenummer: 17150119.0
(22) Anmeldetag: 03.01.2017
(51) Int. Cl.: B60M 1/28

(54) **VERFAHREN UND VORRICHTUNG ZUR ÜBERWACHUNG EINER ENTLANG EINER FAHRSTRECKE VERLAUFENDEN FAHRLEITUNG**

(30) Priorität: 29.01.2016 DE 102016201416
(71) Anmelder: Siemens Aktiengesellschaft, 80333 München (DE)
(72) Erfinder: Terfloth, Sebastian, 01309 Dresden (DE); Dölling, Andre, 91056 Erlangen (DE)

(57) **Zusammenfassung**

Die Erfindung betrifft ein Verfahren und eine Vorrichtung zur Überwachung einer entlang einer Fahrstrecke (2) verlaufenden Fahrleitung (3). Um eine einfache Überwachung zu realisieren, ist bei dem erfindungsgemäßen Verfahren vorgesehen, dass wenigstens eine für eine Kontaktqualität zwischen der Fahrleitung (3) und einem Stromabnehmer (5) eines Fahrzeugs (4) repräsentative Messgröße ermittelt wird und anhand zumindest der wenigstens einen Messgröße wenigstens eine Störstelle (20) ermittelt wird, an der die ermittelte Messgröße wenigstens einmal außerhalb von einem festgesetzten zulässigen Bereich liegt.

## Beschreibung

Die Instandhaltung von Fahrleitungen für elektrische Bahnen oder andere elektrische Fahrzeuge erfolgt üblicherweise anhand vorgegebener Inspektionspläne und Inspektionsfristen, die überwiegend auf den Erfahrungsschatz des Anlagenbetreibers basieren. Einen Aspekt nimmt dabei der Verschleiß des Fahrdrahtes ein. Der tatsächliche Instandhaltungsbedarf ergibt sich aus der Beanspruchung der Anlage und externen Einflüssen, die jedoch dem Anlagenbetreiber, wenn überhaupt, nur stichprobenartig bekannt sind. Die festgelegten Instandhaltungsintervalle der Anlage für Wartungen und Inspektionen basieren daher überwiegend auf Erfahrungswerten. Aufgrund der großen Ausdehnung von Fahrleitungsanlagen und der Vielzahl von Einzelkomponenten ist ein durchgehendes Überwachen von Komponenten der Oberleitung, insbesondere des Fahrdrahts, durch den Einsatz von stationären Überwachungseinrichtungen sehr aufwändig und unter wirtschaftlichen Aspekten nicht immer kostentragend. Einflussgrößen, die die Abnutzung der Fahrleitung beschleunigen, aber dem Instandhalter nicht bekannt sind, können im schlimmsten Fall zu einem Ausfall der Anlage führen. Auf der anderen Seite führt eine unbemerkte geringe Beanspruchung der Fahrleitung dazu, dass eine Inspektion durchgeführt wird, die noch nicht erforderlich ist.

Um einen Zustand der Fahrleitung einer elektrifizierten Fahrstrecke zu diagnostizieren, sind beispielsweise Fahrzeuge mit Messeinrichtungen bekannt, die den Zustand der Fahrleitung während einer Messfahrt erfassen. Hierzu werden üblicherweise speziell ausgerüstete Messfahrzeuge benutzt, die zwischen einer fahrplanmäßigen Befahrung extra auf die Fahrstrecke geschickt werden. Derartige Messfahrzeuge sind beispielsweise in der Zeitschrift Verkehr & Technik, 2009, Heft 6 "Konzept für ein Messsystem zur Verschleißmessung an O-Bus-Fahrdrähten" oder in der Zeitschrift Der Nahverkehr, Ausgabe 4/2013 "Neues System zur Messung des Fahrdrahtverschleißes" beschrieben. Andere Systeme sind beispielsweise aus der DE 197 40 485 C1 oder der DE 198 03 553 C2 bekannt. Die genannten Messfahrzeuge erfassen den Zustand der eisenbahntechnische Anlage stichprobenartig während der Messfahrt und geben eine Aussage zum Verschleiß und Instandhaltungsbedarf. Allerdings liegen die Messfahrten häufig Monate bis Jahre auseinander, so dass Veränderungen der Anlage zwischen den Messfahrten unbemerkt bleiben.

Es ist somit die Aufgabe der vorliegenden Erfindung, ein Verfahren und eine Vorrichtung zur Überwachung einer entlang einer Fahrstrecke verlaufenden Fahrleitung bereitzustellen, die eine zuverlässige Aussage über den Zustand der Fahrleitung treffen können und gegenüber bekannter Verfahren und Vorrichtungen verbessert sind.

Diese Aufgabe wird gelöst durch ein Verfahren zur Überwachung einer entlang einer Fahrstrecke verlaufenden Fahrleitung, bei dem wenigstens eine für eine Kontaktqualität zwischen der Fahrleitung und einem Stromabnehmer eines Fahrzeugs repräsentative Messgröße ermittelt wird und bei dem anhand zumindest der wenigstens einen Messgröße wenigstens eine Störstelle ermittelt wird, an der die ermittelte Messgröße wenigstens einmal außerhalb von einem festgesetzten zulässigen Bereich liegt und bei dem die ermittelte Messgröße und die ermittelte Störstelle vom Fahrzeug zu wenigstens einer Zentrale weitergeleitet werden.

Ferner wird die Aufgabe gelöst durch eine Vorrichtung zur Überwachung einer entlang einer Fahrstrecke verlaufenden Fahrleitung, mit wenigstens einer mit einem Fahrzeug verbundenen Messeinrichtung, die zum Ermitteln einer für eine Kontaktqualität zwischen einem Stromabnehmer des Fahrzeugs und der Fahrleitung repräsentative Messgröße ausgebildet ist, und mit wenigstens einer mit der Messgröße verbundenen Auswerteeinrichtung, die zur Ermittlung wenigstens einer Störstelle anhand zumindest der wenigstens einen Messgröße ausgebildet ist, wobei die ermittelte Messgröße an der Störstelle wenigstens einmal außerhalb von einem festgesetzten zulässigen Bereich liegt und die Vorrichtung wenigstens eine Kommunikationseinrichtung aufweist, die zum Übermitteln der Messgröße und der Störstelle an wenigstens eine Zentrale ausgebildet ist.

Die erfindungsgemäße Lösung hat den Vorteil, dass die Kontaktqualität zwischen der Fahrleitung und dem Stromabnehmer auf relativ einfache Weise ermittelt werden kann, so dass das Verfahren auch von Fahrzeugen im Normalbetrieb durchgeführt werden kann, und so eine kontinuierliche Überwachung der Fahrleitung realisiert werden kann. So können die Fahrleitungen einer Anlage flächendeckend und kontinuierlich überwacht werden. Spezielle Messfahrzeuge, die die Fahrstrecke auf besonderen Messfahrten befahren, werden durch die Erfindung überflüssig. Durch die Erfindung werden daher die Aufwände für zusätzliche Messfahrten und Messfahrzeuge eingespart und zusätzliche bei jeder fahrplanmäßigen Befahrung der Fahrstrecke der Zustand der Fahrleitung erfasst. Dadurch können Instandhaltungsintervalle optimal angepasst werden oder Wartungseinsätze speziell angefordert werden. Das erfindungsgemäße berührungslose Messprinzip hat den Vorteil, dass die Messtechnik den Kontakt nicht beeinflußt.

Die Erfindung kann durch vorteilhafte Ausgestaltungen weiter entwickelt werden, die im Folgenden beschrieben sind.

So kann in einer vorteilhaften Ausgestaltung des erfindungsgemäßen Verfahrens eine Position und/oder eine Geschwindigkeit des Fahrzeugs an der wenigstens einen ermittelten Störstelle erfasst werden. Dies hat den Vorteil, dass durch die Position und/oder die Geschwindigkeit zu jeder ermittelten Störstelle diese auch im Nachhinein wieder findbar ist. So können beispielsweise Wartungstrupps anhand der aufgezeichneten Daten gezielt an die Störstellen geleitet werden.

Um Störstellen zu ermitteln, an denen kein Kontakt zwischen Stromabnehmer und Fahrleitung besteht, kann als Messgröße eine für einen Lichtbogen zwischen dem Stromabnehmer und der Fahrleitung repräsentative Strahlung, insbesondere UV-Strahlung, ermittelt werden. Wenn der Kontakt zwischen Stromabnehmer und Fahrleitung abreißt, entsteht ein die Luftstrecke überwindender Lichtbogen. Dieser Lichtbogen erzeugt eine UV-Strahlung bzw. eine Lichtintensität im Wellenlängenbereich, die ermittelt werden kann. Zusätzlich kann der Fahrzeugstrom gemessen werden und mittels des Fahrzeugstroms ein ermittelter Lichtbogen klassifiziert werden. Dies hat den Vorteil, dass verschiedene ermittelte Lichtbögen unterschiedlich klassifiziert und auf unterschiedliche Kontaktqualitäten geschlossen werden kann.

In einer anderen vorteilhaften Weiterbildung kann als Messgröße eine Kontaktkraft zwischen Fahrleitung und Stromabnehmer ermittelt werden. Ferner kann eine Beschleunigung des Stromabnehmers ermittelt werden. Hierdurch kann auf besonders einfache Weise eine für die Kontaktkraft repräsentative Größe ermittelt werden. Deren Auswertung erkennt, wenn eine zu große Kontaktkraft zwischen Stromabnehmer und Fahrleitung vorliegt, also der Druck des Stromabnehmers auf die Fahrleitung zu groß und dadurch zu großer Verschleiß auftritt.

Um die Wartung der Fahrleitungen einer eisenbahntechnischen Anlage einfach koordinieren zu können, kann die ermittelte Messgröße und die ermittelte Störstelle drahtlos vom Fahrzeug zu der Zentrale weitergeleitet werden.

Ferner kann in der Zentrale aus einer Vielzahl von ermittelten Störstellen und Messgrößen wenigstens ein Verschleißprofil der Fahrleitung erzeugt werden. So kann ein Gesamtbild der Anlage angezeigt werden, durch das Wartungseinsätze besser koordiniert werden können.

In einer vorteilhaften Ausgestaltung der erfindungsgemäßen Vorrichtung kann die Messeinrichtung wenigstens einen Sensor zum Ermitteln einer für einen Lichtbogen zwischen dem Stromabnehmer und der Fahrleitung repräsentative Strahlung, insbesondere UV-Strahlung, aufweisen. Durch den Sensor können Lichtbögen, die für fehlenden Kontakt zwischen Stromabnehmer und Fahrleitung stehen, leicht ermittelt werden, wie oben bereits beschrieben.

Ferner kann die Messeinrichtung einen Beschleunigungssensor zum Ermitteln einer Beschleunigung des Stromabnehmers aufweisen. Hierdurch kann eine zu starke Kontaktkraft des Stromabnehmers mit der Fahrleitung ermittelt werden, der die oben bereits beschriebenen negativen Auswirkungen auf die Fahrleitung hat.

Die Erfindung betrifft ferner eine verkehrstechnische Anlage mit einer Fahrstrecke, mit einer entlang der Fahrstrecke verlaufenden Fahrleitung und mit wenigstens einem auf der Fahrstrecke bewegbaren Fahrzeug, das wenigstens einen mit der Fahrleitung verbindbaren Stromabnehmer aufweist, und mit wenigstens einer Zentrale. Um die Fahrleitungen der verkehrstechnischen Anlage überwachen zu können, weist das Fahrzeug wenigstens eine erfindungsgemäße Vorrichtung nach einer der oben beschriebenen Ausführungsformen auf. Die verkehrstechnische Anlage kann beispielsweise eine eisenbahntechnische Anlage sein oder aber auch eine Anlage mit E-Trucks oder O-Bussen.

Schließlich betrifft die Erfindung auch ein Fahrzeug, das entlang einer mit einer Fahrleitung ausgerüsteten Fahrstrecke bewegbar ist und das wenigstens einen mit der Fahrleitung verbindbaren Stromabnehmer aufweist. Um die Fahrleitungen überwachen zu können, weist das Fahrzeug wenigstens eine erfindungsgemäße Vorrichtung nach einer der oben beschriebenen Ausführungsformen auf.

Im Folgenden wird die Erfindung mit Bezug auf die beispielhafte Ausführungsform der Erfindung in den beigefügten Zeichnungen erläutert.

Es zeigen:
- Figur 1: eine schematische Darstellung einer erfindungsgemäßen verkehrstechnischen Anlage;
- Figur 2: eine schematische Darstellung eines Fahrzeugs aus Figur 1 mit einer beispielhaften Ausführungsform der erfindungsgemäßen Überwachungsvorrichtung.

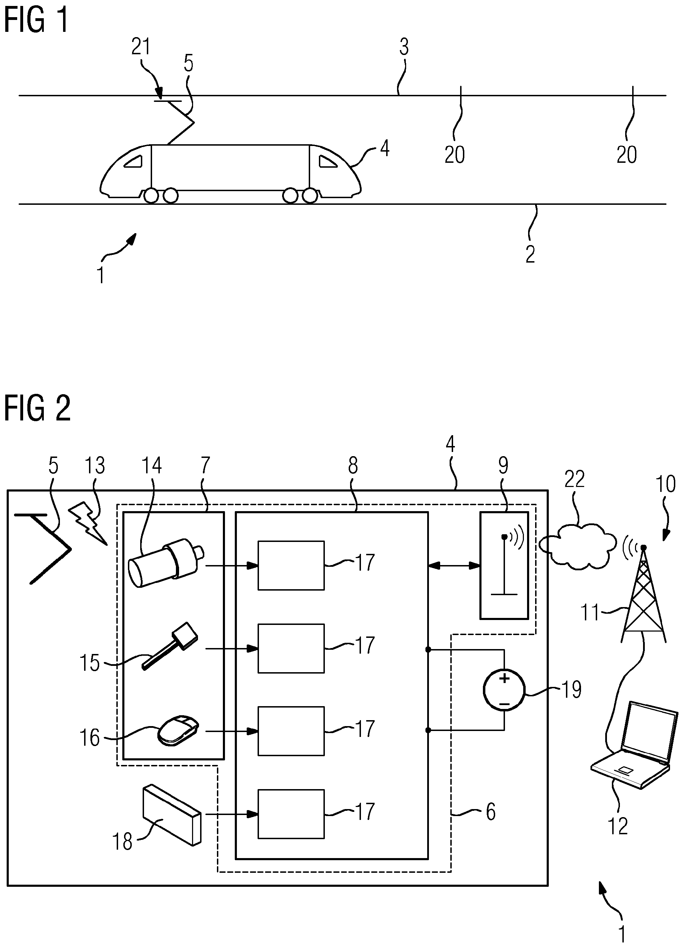

Im Folgenden wird die Erfindung mit Bezug auf die beispielhafte Ausführungsform der Figuren 1 und 2 beschrieben. Figur 1 zeigt eine erfindungsgemäße verkehrstechnische Anlage 1, die wenigstens eine Fahrstrecke 2, eine Fahrleitung 3 und wenigstens ein Fahrzeug 4 umfasst. Die verkehrstechnische Anlage 1 ist hier beispielhaft als eine eisenbahntechnische Anlage, das Fahrzeug 4 beispielhaft als Lokomotive und die Fahrstrecke 2 beispielhaft als Schienenpaar dargestellt. Alternativ könnte die verkehrstechnische Anlage 1 auch eine Anlage mit E-Trucks oder O-Bussen sein, die auf einer elektrifizierten Straße fahren. Das Fahrzeug 4 ist als ein elektrisch betriebenes Fahrzeug ausgebildet, das seine Traktionsenergie aus der Fahrleitung 3 bezieht. Hierfür weist das Fahrzeug 2 seinen Stromabnehmer 5 auf, der zumindest abschnittsweise die Fahrleitung 3 während der Fahrt entlang der Fahrstrecke 2 kontaktiert.

Wie in Figur 2 dargestellt, weist das Fahrzeug 4 neben dem Stromabnehmer 5 auch eine erfindungsgemäße Vorrichtung 6 zur Überwachung der Fahrleitung 3 auf. Die Vorrichtung 6 umfasst eine Messeinrichtung 7 und eine Auswerteeinrichtung 8 sowie eine Kommunikationseinrichtung 9.

Die verkehrstechnische Anlage 1 weist neben den in Figur 1 dargestellten und oben genannten Komponenten auch eine Zentrale 10 auf, die eine Empfangseinrichtung 11 und eine Verarbeitungseinrichtung 12 umfasst.

Die Messeinrichtung 7 ist erfindungsgemäß zum Ermitteln wenigstens einer für die Kontaktqualität zwischen dem Stromabnehmer 5 und der Fahrleitung 3 repräsentative Messgröße ausgebildet. Diese Messgröße ist beispielsweise eine UV-Strahlung, die durch einen Lichtbogen 13 zwischen dem Stromabnehmer 5 und der Fahrleitung 3 erzeugt wird. Zum Erfassen dieser UV-Strahlung oder einer anderen für den Lichtbogen 13 repräsentativen Strahlung weist die Messeinrichtung 7 in der Ausführungsform in Figur 2 wenigstens einen Strahlungssensor, beispielsweise einen UV-Sensor 14, auf. Der UV-Sensor 14 ist mit einer Schnittstelle 17, beispielsweise einem Analog-Eingang, der Auswerteeinrichtung 8 verbunden und entweder direkt am Stromabnehmer 5 oder auf dem Dach des Fahrzeugs 4 oder an sonstiger geeigneter Stelle angeordnet. Eine weitere Messgröße, die für die Kontaktqualität zwischen Stromabnehmer 5 und Fahrleitung 3 repräsentativ ist, ist eine Beschleunigung des Stromabnehmers 5, die durch den Kontakt mit der Fahrleitung 3 ausgelöst wird. Hohe Kontaktkräfte zwischen dem Stromabnehmer 5 und der Fahrleitung 3 können indirekt über die Messung der Beschleunigung an der Schleifleiste 21 des Stromabnehmers 5 ermittelt werden. Hierfür umfasst die Messeinrichtung 7 wenigstens einen Beschleunigungssensor 15, der am Stromabnehmer 5 angeordnet ist. Alternativ zur Beschleunigungsmessung kann die Kontaktkraft zwischen der Schleifleiste 21 des Stromabnehmers 5 und der Fahrleitung 3 natürlich auch direkt gemessen werden.

Ferner umfasst die Messeinrichtung 7 in der beispielhaften Ausführungsform in Figur 2 einen GPS-Sensor 16, der hier beispielhaft als eine GPS-Maus dargestellt ist. Der GPS-Sensor 16 ermittelt die Position und/oder die Geschwindigkeit des Fahrzeugs 4 bei seiner Fahrt entlang der Fahrtstrecke 2.

Die Auswerteeinrichtung 8 umfasst mehrere Schnittstellen 17, die beispielsweise als Analog-Eingänge oder serielle Schnittstellen ausgebildet sein können. Der UV-Sensor 14, der Beschleunigungssensor 15 und der GPS-Sensor 17 der Messeinrichtung 7 sind über die Schnittstellen 17 mit der Auswerteeinrichtung 8 zur Übermittlung der Messergebnisse verbunden. Weiterhin ist ein Stromwandler 18 des Fahrzeugs 4 ebenfalls über eine Schnittstelle 17 mit der Auswerteeinrichtung 8 verbunden, um einen Messwert für einen vom Stromwandler 18 gemessenen Fahrzeugstrom an die Auswerteeinrichtung 8 zu übermitteln.

Schließlich ist die erfindungsgemäße Vorrichtung 6 zur Energieversorgung mit dem Energieversorgungsnetz 19 des Fahrzeugs 4 verbunden, das beispielsweise ein Bordnetz mit 24 V Gleichstromversorgung ist.

Die Fahrleitung 3 weist in der beispielhaften Darstellung in Figur 1 Störstellen 20 auf, die von der erfindungsgemäßen Vorrichtung 6 ermittelt werden. Dieses Verfahren zur Ermittlung der Störstellen wird im Folgenden beschrieben.

Während der Fahrt des Fahrzeugs 4 entlang der Fahrstrecke 2 ist der Stromabnehmer 5 im Eingriff und in Kontakt mit der Fahrleitung 3. Durch das erfindungsgemäße Verfahren wird während dieser Fahrt des Fahrzeugs 4 die Kontaktqualität von Stromabnehmer 5 und Fahrleitung 3 beurteilt, weil dies für einen Verschleiß von der Fahrleitung 3 und der Schleifleiste 21 des Stromabnehmers 5 ausschlaggebend ist.

Bei ungestörten und optimalen Kontaktverhältnissen läuft der Stromabnehmer 5 ruhig an der Fahrleitung 3 entlang und es entstehen keine Funken und Lichtbögen. Bei gestörten Kontaktverhältnissen entstehen, beispielsweise durch Kontakttrennung, bei der die Kontaktkraft gleich Null ist, Lichtbögen. Gestörte Kontaktverhältnisse können auch dadurch zum Ausdruck kommen, dass hohe Kräfte wirken. Im ersten Fall erhöht sich der Verschleiß an der Fahrleitung 3 und dem Stromabnehmer 5 durch einen vom Lichtbogen verursachten Abbrand. Im letzteren Fall erhöht sich der Verschleiß durch einen verstärkten mechanischen Abrieb. Durch beide Fälle entstehen sogenannte Störstellen 20 in der Fahrleitung 3.

Um die Störstellen 20 zu erkennen, wird gemäß dem erfindungsgemäßen Verfahren die für einen entstandenen Lichtbogen repräsentative UV-Strahlung durch den UV-Sensor 14 ermittelt. Lichtbögen können durch die Messung der von ihnen in einem definierten Frequenzspektrum emittierten UV-Strahlung durch den UV-Sensor 14 sicher detektiert werden. Durch zu hohe Kontaktkräfte verursachte Störstellen werden indirekt über die Messung der Beschleunigung an der Schleifleiste 21 des Stromabnehmers 5 durch den Beschleunigungssensor 15 detektiert.

Für die räumliche Zuordnung von erkannten Störstellen 20 entlang der Fahrstrecke 2 wird die Position des Fahrzeugs 4 erfasst. Dies geschieht durch den GPS-Sensor 16 oder alternativ auch über ein im Fahrzeug verbautes Positions-Erfassungssystem. Sollte einmal kein GPS-Signal zur Verfügung stehen, wie beispielsweise in einem Tunnel, eignet sich das Positions-Erfassungssystem, das durch vorhandene Zugsicherungssysteme und/oder fahrzeugseitige Geschwindigkeitsgeber zur Ortung häufig bereits vorhanden ist. Zusätzlich misst der Stromwandler 18 den Fahrzeugstrom und erlaubt so eine Klassifizierung der gemessenen Lichtbögen 13 und ermöglicht dadurch weitere Rückschlüsse auf den Grad des Fahrleitungsverschleißes.

Sämtliche Messwerte werden in der Auswerteeinrichtung 8 erfasst und anhand eines vorgegebenen Auswertealgorithmus automatisch ausgewertet. Die Messwerte und die ermittelten Störstellen 20 werden von der Kommunikationseinrichtung 9 drahtlos an die Zentrale 10 übermittelt. Hierfür weist die Kommunikationseinrichtung 9 beispielsweise ein UMTS-Modem auf, dass die Daten drahtlos über ein UMTS-Netz 22 an die Empfangseinrichtung 11 der Zentrale 10 übermittelt. Die erfindungsgemäße Vorrichtung 6 arbeitet mit Ausnahme von der Energieversorgung über das Energieversorgungsnetz 19 autark zum Fahrzeug 4, so dass sie besonders einfach auf bestehende Fahrzeuge 4 nachgerüstet werden kann.

In der Zentrale 10 kann in der beispielhaften Ausführungsform in den Figuren der Zustand sämtlicher Fahrleitungen 3 der verkehrstechnischen Anlage 1 überwacht werden. So werden Störstellen 20 rechtzeitig erkannt und ein Ausfall der verkehrstechnischen Anlage 1 vermieden. Störstellen 20, die noch nicht sofort zum Ausfall führen, aber zu übermäßigen Verschleiß führen, werden frühzeitig identifiziert und ein Instandsetzungsauftrag kann von der Zentrale 10 ausgelöst werden. Bei einem Einsatz der erfindungsgemäßen Vorrichtung 6 auf einer größeren Anzahl von Fahrzeugen 4 kann der Zustand sämtlicher Fahrleitungen 3 flächendeckend und kontinuierlich erfasst werden. So ist eine zielgerichtete Instandsetzung der Fahrleitungen 3 möglich, weil Störstellen 20 bereits im Anfangsstadium ihrer Entstehung erkannt und räumlich präzise zugeordnet werden.

Gemäß dem erfindungsgemäßen Verfahren wird eine Störstelle 20 erkannt, wenn die gemessene UV-Strahlung oder die gemessene Beschleunigung der Schleifleiste 21 des Stromabnehmers 5 einen festgelegten zulässigen Bereich verlassen. Die Bereiche verlaufen jeweils von null bis zu einem festgelegten Grenzwert für die UV-Strahlung beziehungsweise die Beschleunigung. Wenn die Messgröße, also die UV-Strahlung beziehungsweise die Beschleunigung, den Grenzwert überschreitet, kann von einem entstandenen Lichtbogen beziehungsweise einer zu großen Kraft der Schleifleiste 21 auf die Fahrleitung 3 ausgegangen werden, so dass die Auswerteeinrichtung 8 eine Störstelle 20 registriert und abspeichert. Der von der Auswerteeinrichtung 8 angewandte Algorithmus kann so ausgebildet sein, dass erst ein mehrfaches Überschreiten des Grenzwerts durch die Messgröße innerhalb einer vorgegebenen Zeit oder Strecke als eine Störstelle 20 gewertet wird. Dadurch können durch Ausreißer bedingte Störstellen vermieden werden.

In der Zentrale 10 werden die übermittelten Messwerte und Störstellen 20 weiterverarbeitet. Die Messwerte und Störstellen 20 können sowohl kontinuierlich an die Zentrale 10 übermittelt werden oder beispielsweise in Bahnhöfen oder an anderen vorbestimmten Stellen, wenn beispielsweise das UMTS-Netz 22 vorhanden ist. Die Messwerte und Störstellen 20 werden im Betrieb der verkehrstechnischen Anlage 1 permanent ermittelt und in der Zentrale 10 wird daraus ein Verschleißprofil aller Fahrleitungen 3 der Anlage 1 erzeugt. Das Verschleißprofil wird bei der beispielhaften Ausführungsform in Figur 2 von der Verarbeitungseinrichtung 12, beispielsweise einem Laptop oder anderen Computer, erzeugt. Das Verschleißprofil zeigt den aktuellen Zustand sämtlicher Fahrleitungen 3 der verkehrstechnischen Anlage 1. Das Verschleißprofil ist dabei beispielsweise als eine Fahrdrahtverschleiß- und/oder Lichtbogenhäufigkeitskarte für die verkehrstechnischen Anlage 1 ausgestaltet. In der Zentrale 10 können so verschleißintensive Fahrleitungsabschnitte geortet werden. Die erfindungsgemäße Vorrichtung 6 wird beispielsweise auf einem Teil der Fahrzeuge 4 der verkehrstechnischen Anlage 1 eingesetzt, so dass ein hinreichend dichter Zyklus von Befahrungen durch Fahrzeuge 4, die mit der Vorrichtung 6 ausgestattet sind, erfolgt. So wird eine ausreichend große Datenbasis erzeugt, die zu dem Verschleißprofil weiterverarbeitet werden und aus dem Verschleißprognosen erstellt werden können. Durch die räumliche Zuordnung der Störstellen 20 können neue Störstellen 20 in der Fahrleitung 3 von bereits bekannten Störstellen 20 unterschieden werden. Aus der Messung des Traktionsstroms in Verbindung mit hoch aufgelösten Positionsdaten kann die mittlere Strombelastung des Kontakts zwischen Stromabnehmer und Fahrdraht entlang der gesamten Fahrleitung 3 abgeschätzt werden. Dieser kann als Indikator für einen Fahrdrahtverschleiß dienen und unterstützt eine Instandhaltung der verkehrstechnischen Anlage 1.

## Patentansprüche

1. Verfahren zur Überwachung einer entlang einer Fahrstrecke (2) verlaufenden Fahrleitung (3),
bei dem wenigstens eine für eine Kontaktqualität zwischen der Fahrleitung (3) und einem Stromabnehmer (10) eines Fahrzeugs (4) repräsentative Messgröße ermittelt wird und bei dem anhand zumindest der wenigstens einen Messgröße wenigstens eine Störstelle (20) ermittelt wird, an der die ermittelte Messgröße wenigstens einmal außerhalb von einem festgesetzten zulässigen Bereich liegt,
**dadurch gekennzeichnet, dass**
die ermittelte Messgröße und die ermittelte Störstelle (20) vom Fahrzeug (4) zu wenigstens einer Zentrale (10) weitergeleitet werden.

2. Verfahren nach Anspruch 1,
**dadurch gekennzeichnet, dass**
eine Position und/oder eine Geschwindigkeit des Fahrzeugs (4) an der wenigstens einen ermittelten Störstelle (20) erfasst wird.

3. Verfahren nach Anspruch 1 oder 2,
**dadurch gekennzeichnet, dass**
als Messgröße eine für einen Lichtbogen (13) zwischen dem Stromabnehmer (5) und der Fahrleitung (3) repräsentative Strahlung ermittelt wird.

4. Verfahren nach Anspruch 3,
**dadurch gekennzeichnet, dass**
der Fahrzeugstrom gemessen wird und mittels des Fahrzeugstroms ein ermittelter Lichtbogen (13) klassifiziert wird.

5. Verfahren nach einem der oben genannten Ansprüche,
**dadurch gekennzeichnet, dass**
als Messgröße eine Kontaktkraft zwischen Stromabnehmer (5) und Fahrleitung (3) ermittelt wird.

6. Verfahren nach einem der oben genannten Ansprüche,
**dadurch gekennzeichnet, dass**
als Messgröße eine Beschleunigung des Stromabnehmers (5) oder eines Teils des Stromabnehmers (5) ermittelt wird.

7. Verfahren nach einem der oben genannten Ansprüche,
**dadurch gekennzeichnet, dass**
in der Zentrale aus einer Vielzahl von ermittelten Störstellen und Messgrößen wenigstens ein Verschleißprofil der Fahrleitung (3) erzeugt wird.

8. Vorrichtung (6) zur Überwachung einer entlang einer Fahrstrecke (2) verlaufenden Fahrleitung (3),
mit wenigstens einer mit einem Fahrzeug (4) verbundenen Messeinrichtung (7), die zum Ermitteln wenigstens einer für eine Kontaktqualität zwischen einem Stromabnehmer (5) des Fahrzeugs (4) und der Fahrleitung repräsentative Messgröße ausgebildet ist, und
mit wenigstens einer mit der Messeinrichtung (7) verbundenen Auswerteeinrichtung (8), die zur Ermittlung wenigstens einer Störstelle (20) anhand zumindest der wenigstens einen Messgröße ausgebildet ist, wobei die ermittelte Messgröße an der Störstelle (20) wenigstens einmal außerhalb von einem festgesetzter zulässigen Bereich liegt,
**dadurch gekennzeichnet, dass**
die Vorrichtung (6) wenigstens eine Kommunikationseinrichtung (9) aufweist, die zum Übermitteln der Messgröße und der Störstelle an wenigstens eine Zentrale (10) ausgebildet ist.

9. Vorrichtung (6) nach Anspruch 8,
**dadurch gekennzeichnet, dass**
die Messeinrichtung (7) wenigstens einen Sensor (14) zum Ermitteln einer für einen Lichtbogen (13) zwischen dem Stromabnehmer (5) und der Fahrleitung (3) repräsentative Strahlung aufweist.

10. Vorrichtung (6) nach Anspruch 9,
**dadurch gekennzeichnet, dass**
die Messeinrichtung (7) einen Beschleunigungssensor (15) zum Ermitteln einer Beschleunigung des Stromabnehmers (5) aufweist. 11

11. Verkehrstechnische Anlage (1) mit wenigstens einer Fahrstrecke (2), mit wenigstens einer entlang der Fahrstrecke (2) verlaufenden Fahrleitung (3), mit wenigstens einem auf der Fahrstrecke (3) bewegbaren Fahrzeug (4), das wenigstens einen mit der Fahrleitung (3) verbindbaren Stromabnehmer (5) aufweist, und mit wenigstens einer Zentrale (10),
**dadurch gekennzeichnet, dass**
das Fahrzeug (4) wenigstens eine Vorrichtung (6) nach einem der oben genannten Ansprüche 8 bis 10 aufweist.

12. Fahrzeug (4), das entlang einer mit einer Fahrleitung (3) ausgerüsteten Fahrstrecke (2) bewegbar ist und das wenigstens einen mit der Fahrleitung (3) verbindbaren Stromabnehmer (5) aufweist,
**dadurch gekennzeichnet, dass**
das Fahrzeug (4) wenigstens eine Vorrichtung (6) nach einem der oben genannten Ansprüche 8 bis 10 aufweist.
